# EUROPÄISCHE PATENTSCHRIFT

(11) **EP 1 545 061 B1**
(45) Veröffentlichungstag und Bekanntmachung des Hinweises auf die Patenterteilung: **17.09.2008**
(21) Anmeldenummer: 04029635.2
(22) Anmeldetag: 15.12.2004
(51) Int. Cl.: H04L 12/28, H04Q 7/38

(54) **Verfahren und Vorrichtung zur Herstellung einer Verbindung zur Datenübermittlung zwischen einem Computer und dem Internet**
Method and apparatus for setting up a connection for data transmission between a computer and the internet
Procédé et dispositif pour établir une connexion pour la transmission de données entre un ordinateur et l'internet

(30) Priorität: 19.12.2003 DE 10359777
(43) Veröffentlichungstag der Anmeldung: 22.06.2005
(73) Patentinhaber: WebToGo Mobiles Internet GmbH, 81371 München (DE)
(72) Erfinder: Duesing, Peter, Dr., 80538 München (DE)
(74) Vertreter: Müller, Frank Peter

(56) Entgegenhaltungen:
- WO-A-01/63843
- DE-A1- 10 064 951
- IBM, INTERNATIONAL BUSINESS MACHINES CORPORATION: "MOBILITY CLIENT FOR WINDOWS USER'S GUIDE Version 5.0.1 (Third Edition)"[Online] 21. November 2003 (2003-11-21), XP002321694 INTERNET Gefunden im Internet: URL:http://publib.boulder.ibm.com/pvc/wecm /501/en/info/WinCG/wcwin.pdf> [gefunden am 2005-03-16]
- DENNIS ANDERSON, FRED CHRISTENSEN (IBM): "WebSphere Everyplace Connection Manager:increasing mobile security, reducing wireless costs" IBM PERVASIVE COMPUTING, [Online] 23. April 2003 (2003-04-23), XP002321695 INTERNET Gefunden im Internet: URL:http://www-1.ibm.com/industries/wirele ss/doc/content/bin/WECM_WP_final42303.pdf> [gefunden am 2005-03-16]

## Beschreibung

Die vorliegende Erfindung betrifft ein Verfahren zur Herstellung einer Verbindung zur Datenübermittlung zwischen einem Computer und dem Internet, bei dem eine interne Datenbank mit den Parametern der in Betracht kommenden Verbindungsoptionen erstellt wird, durch den Computer geprüft wird, welche der Verbindungsoptionen derzeit zur Verfügung steht und der Internetzugang durch den Computer aufgebaut wird und eine Vorrichtung zur Durchführung dieses Verfahrens. Insbesondere liefert die Erfindung eine vereinfachte Form der Konfiguration einer Internetverbindung auf mobilen Geräten mit den Parametern, die für den Aufbau einer Verbindung über verschiedene Hardware und über verschiedene ISPs(Internet Service Provider) und Mobilfunknetze benötigt werden.

Internetverbindungen ermöglichen die Nutzung eines Computers für eine Vielzahl von Applikationen, wie E-Mail und Web-Browser und sind somit ständige Voraussetzung für einen großen Teil der Verwendungszwecke eines Computers. Um eine Internetverbindung aufzubauen,muss ein Computer mit anderer Hardware und einem Netzwerk zusammenspielen. Herkömmlicherweise wird ein Großteil der Internetverbindungen stationär, also über ein fest installiertes Netzwerk oder das Festnetz der Telefongesellschaften aufgebaut. Hier wird stets dieselbe Hardware und dieselbe Verbindungskonfiguration verwendet. Wenn man die ganze für Datenkommunikationszwecke installierte Software als Treiber bezeichnet, so wird dieser Treiber also auch nur für einen Verbindungsfall programmiert werden. Computer werden jedoch zunehmend mobil verwendet und verfügen somit oftmals auf Hardwareseite über mehrere Internetzugangsmöglichkeiten. Ein moderner Laptop weist häufig eine installierte LAN (Local Area Network) und Festnetzmodemkarte auf, kann aber auch über eine Infrarot- oder Bluetooth-Verbindung über ein datenfähiges Mobiltelefon und das GSM-Netz eine Internetverbindung herstellen, wenn weder LAN noch Festnetz zur Verfügung steht.
Nach dem derzeitigem Stand der Technik, wie er z.B. im Microsoft Windows Betriebssystem realisiert ist - siehe International Business Machines Corporation "Mobility Client for Windows User'Guide XP-002321694" -, wird versucht, über einen vorkonfigurierten Treiber eine Internetverbindung aufzubauen, ist dieser Versuch nicht erfolgreich, werden ggfs. ein oder mehrere weitere Versuche unternommen. Eine Prüfung vor dem Verbindungsaufbau, welche Verbindungsmöglichkeiten bestehen, ist nicht vorgesehen. Diese Vorgehensweise ist nur sinnvoll, wenn nur wenige Faktoren über die Möglichkeit des Verbindungsaufbaus entscheiden und der Verbindungsaufbau - oder das Scheitern - schnell erfolgt, aber nicht bei der Vielfalt der Möglichkeiten - auch der verwendbaren Hardware - im Mobilfunkbereich.

Aus der DE 100 64 951 A1 ist ein Verfahren bekannt, zur Organisation von Kommunikationswegen von und zu ihre Position, z.B. in einem KFZ verändernden Kommunikationsendgeräten. Hierbei werden Informationen über das Benutzerprofil, z.B. Aktivitätszeiten, sowie zur Kostenstruktur und Übertragungsqualität gespeichert und in Abhängigkeit von diesen gespeicherten Informationen die Bildung oder Beendigung von Kommunikationswegen gesteuert. Dieses bekannte Verfahren betrifft jedoch nicht die Modalitäten der Herstellung einer Internetverbindung durch eine eigenständige Erkennung der derzeit verfügbaren Gegebenheiten, sondern lediglich die Auswahl der bevorzugten Verbindung auf Basis der gemessenen Feldstärke und Standortkoordinaten. Anhand dieser Parameter kann man jedoch nur eine kleine Teilmenge der möglichen Internetverbindungen erkennen geschweige denn aufbauen.
Aus der WO 01/63843 A1 ist ein Verfahrens der eingangs genannten Art bekannt, das es gestattet, eine Verbindung eines Computers mit dem Internet über ein WLAN-Netz aufzubauen. Hierbei wird aufgrund gespeicherter Daten vor Verbindungsaufbau geprüft, welche Verbindungsmöglichkeiten gegeben sind und erst dann eine entsprechende Verbindung hergestellt.

Die Aufgabe der hier vorliegenden Erfindung besteht darin, ein verbessertes Konfigurationsverfahren zu schaffen, das alle zur Verfügung stehenden Internetzugangswege überprüft, dem Nutzer die optimale Verbindungsmöglichkeit darlegt und dem Nutzer einen Verbindungsaufbau per Knopfdruck und ohne weiteres Fachwissen ermöglicht.

Die Erfindung löst diese Aufgabe durch ein Verfahren der eingangs genannten Art mit den kennzeichnenden Merkmalen des Patentanspruchs 1.

Vorteilhafterweise wird die interne Datenbank zusätzlich mit Daten betreffend die Übertragungsgeschwindigkeit und Kosten der verschiedenen Verbindungsoptionen zwischen dem Computer und dem Internet geladen. Besonders vorteilhaft ist es, wenn die Daten der internen Datenbank periodisch auf den neuesten Stand gebracht werden.

Gemäß einer weiteren vorteilhaften Ausführungsform der Erfindung stellt der Computer dem Nutzer Verbindungsoptionen zum Internet zur Auswahl und stellt eine Verbindung aufgrund der vom Nutzer getroffenen Entscheidung her. Es besteht damit die Möglichkeit, den Zugriff auf das Internet in Abhängigkeit von der Verbindungscharakteristik sowohl aktiv als auch passiv anzupassen. Der Nutzer kann abhängig von Kosten und Geschwindigkeit der Verbindung den Internetzugriff einiger Anwendungen einschränken oder optimieren und das Verfahren ermöglicht es, bei Drittapplikationen das eigene Internetzugriffverhalten auf der Basis von Geschwindigkeit und Kosten zu modifizieren.

Die vorliegende Erfindung liefert damit auch einen netzwerk-übergreifend mit dem Internet verbundenen Computer, der per Knopfdruck eine Internetverbindung aufbauen oder dem Nutzer die bestmögliche Internetverbindung aufzeigen kann. Bei dem erfindungsgemäßen Verfahren kann der Nutzer auch gezielt einen Verbindungsweg prüfen, z.B. die Verfügbarkeit eines WLAN (Wireless LAN) Access Points oder der Einwahlmöglichkeiten über ein Mobiltelefon, das über den Infrarotport mit dem Computer verbunden ist. Bei einer bestehenden Verbindung überwacht das Programm den Datendurchsatz der Internetverbindung auf den verschiedenen Ports und bietet zum einen allen anderen auf dem Computer befindlichen Internetapplikationen eine neue Schnittstelle zur Ermittelung der Kosten und Geschwindigkeit, auf Basis derer diese Applikationen ihren Internetzugriff anpassen können. Zum anderen ändert das hier beschriebene Verfahren aktiv das Internet-Routing entsprechend durch den Nutzer definierten Regeln und reguliert auf diese Art und Weise aktiv den Zugriff von Applikationen auf das Internet. So kann bei einer langsamen oder teuren Verbindung der Internetzugriff auf das Nötigste beschränkt werden und zum Beispiel eine automatische Softwareaktualisierung über das Internet nur dann durchgeführt werden, wenn eine schnelle Verbindung vorhanden ist. Bei dieser aktiven Einschränkung übernimmt die vorliegende Erfindung die Aufgabe von sogenannten bekannten "Personal Firewall"-Programmen, die den Verkehr auf bestimmten Internet Ports kontrollieren und diese Ports applikationsgebunden entweder freigeben oder sperren. Erfindungsgemäß können diese Einschränkungen abhängig von der Verbindung gesteuert und bei spezifischen Verbindungen und Ports ein Optimierungsserver zwischengeschaltet werden. Beispielsweise gibt es Server, die den Graphikinhalt von Webseiten dynamisch in der Auflösung verschlechtern und damit eine erhebliche Datenkompression erreichen, was wiederum zu stark beschleunigtem Seitenaufbau bei einer langsamen Internetverbindung führt. Durch die Erfindung wird die Möglichkeit geschaffen, einen solchen Server je nach Verbindungsgeschwindigkeit hinzuschalten zu können.

Die hier beschriebene Erfindung ist für tragbare Computer jeder Art gedacht, wobei jedes Betriebsystem zusätzlichen Programmieraufwand erfordert. Es ist sinnvoll für die Installation auf Laptops und Taschencomputern, sowie sogenannten Smartphones.

Da in Europa und großen Teilen der Welt das GSM-Netz die einzige wirklich flächendeckende Datenübertragungsmöglichkeit darstellt, muss das erfindungsgemäße Verfahren in jedem Fall vom tragbaren Computer über das GSM Netz - und somit entweder über ein spezielles Modem oder über ein datenfähiges Mobiltelefon - eine Verbindung zum Internet herstellen können. Deshalb wird die interne Datenbank auch mit den Daten bekannter Mobilfunkmodems und Mobiltelefone, sowie der von diesen unterstützten Protokolle gespeist. Der Computer prüft, welches Mobilfunknetz zur Verfügung steht und welches Netz das Vertragsnetz bildet und baut im Zusammenwirken mit der internen Datenbank den Internetzugang auf.

Während der technisch versierte Nutzer manchmal nach einiger Recherche, über die vom Betriebssystem zur Verfügung gestellten Konfigurationsmöglichkeiten in einem bestimmten Netz eine Internetverbindung manuell konfigurieren kann, so ermöglicht das erfindungsgemäße Verfahren auch dem Laien den schnellen und einfachen Internetzugang.

Die vorliegende Erfindung betrifft ferner auch eine Vorrichtung zur Herstellung einer Verbindung zur Datenübermittlung zwischen einem Computer und dem Internet - im Folgenden auch "Internet-Assistent" genannt mit einer internen Datenbank mit den Daten über in Betracht kommende Verbindungsoptionen, einer Prüfeinrichtung zur Prüfung der zur Verfügung stehenden Verbindungsoptionen, einer Konfigurierungseinrichtung zur Konfigurierung einer Verbindung und einer Verbindungseinrichtung zur Herstellung einer Verbindung.

Bevorzugte Ausführungsbeispiele der vorliegenden Erfindung werden nachfolgend bezugnehmend auf die beiliegenden Figuren näher erläutert. Es zeigen:
Fig. 1 eine schematische Darstellung der Internetverbindungsmöglichkeiten, die von der vorliegenden Erfindung erkannt und konfiguriert werden;
Fig. 2 ein Blockdiagramm des Systems aus Figur 1;
Fig. 3 eine beispielhafte Benutzeroberfläche zur Eingabe von Tarifdaten;
Fig. 4a & 4b eine beispielhafte Benutzeroberfläche zur Ansteuerung der Systemmodule;
Fig. 5 ein Flussdiagram auf hoher Ebene gemäß der vorliegenden Erfindung zur automatischen Erkennung der Verbindungsmöglichkeiten und Erstellung;
Fig. 6 ein detailliertes Flussdiagram zur Erkennung und Konfiguration einer WLAN Verbindung;
Fig. 7 ein detailliertes Flussdiagram zur Erkennung von Mobilmodems;
Fig. 8 ein detailliertes Flussdiagram zur Bestimmung der Charakteristika von Mobilmodems;
Fig. 9 ein detailliertes Flussdiagram zur GSM Netzwerkerkennung über Mobilmodems;
Fig. 10 ein detailliertes Flussdiagram zur Benutzerinteraktion für die Eingabe eines neuen Mobilfunknetzwerkes;
Fig. 11 eine beispielhafte Benutzeroberfläche zur Auswahl der Mobilfunkverbindung;
Fig. 12 ein detailliertes Flussdiagram zur Bestimmung der Roaming-Optionen und des Datenübertragungsprotokolls für Mobilfunkverbindungen;
Fig. 13 ein detailliertes Flussdiagram zum Verbindungsaufbau einer GSM-basierten CSD (Circuit Switched Data) Datenverbindung;
Fig. 14 ein detailliertes Flussdiagram zum Verbindungsaufbau einer GSM-basierten HCSD Datenverbindung;
Fig. 15 ein detailliertes Flussdiagram zum Verbindungsaufbau einer GSM-basierten GPRS Datenverbindung;
Fig. 16a & 16b eine beispielhafte Benutzeroberfläche zur Anpassung der erlaubten Internetzugriffe;
Fig. 17 eine beispielhafte Benutzeroberfläche zur Abfrage des Umgangs mit dem Internetzugriff einer neuen Applikation;

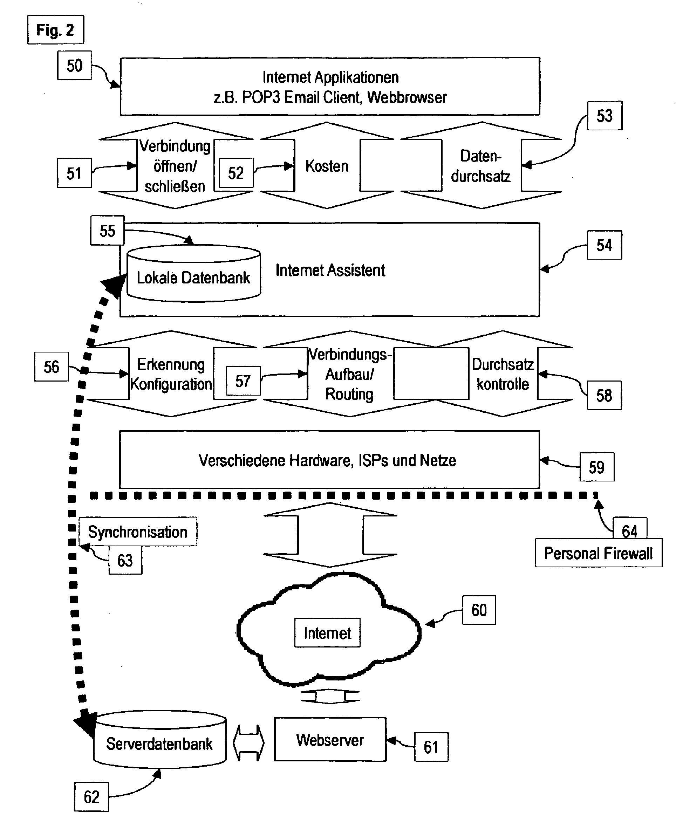

Anhand der Figuren wird ein Ausführungsbeispiel des erfindungsgemäßen Verfahrens zur automatischen Konfiguration einer Internetverbindung, zum benutzerfreundlichen Wechseln zwischen Internetzugangswegen über verschiedene Hardware und zur Rückmeldung der angefallenen Verbindungskosten und Verbindungsgeschwindigkeit beschrieben. Das Verfahren identifiziert - siehe Fig.2 - die dem Anwender zur Verfügung stehenden Verbindungsoptionen anhand einer internen Datenbank 55, die Verbindungsgeschwindigkeit, Kosten und erforderliche Parameter für jede Verbindungsoption beinhaltet. Diese interne Datenbank 55 wird mit einer zentralen Datenbank 62 entweder direkt über das Internet durch Zugriff auf ein Skript auf einem Webserver 61 synchronisiert 63 oder aber durch manuellen Austausch einer Datei, in welcher die Datenbank enthalten ist. Die zentrale Datenbank 62 kann vorteilhafterweise direkt durch den hier beschriebenen Internet Assistenten 54 gepflegt werden: Wenn der Internet Assistent 54 z.B. ein neues Mobiltelefon entdeckt, so werden bei der nächsten Synchronisation die Charakteristika dieses Mobiltelefons an die zentrale Datenbank 62 zurückübermittelt. Die Charakteristika eines Objekts können dabei teilweise durch den Internet Assistenten 54 automatisch erkannt werden, z.B. durch Verbindungsversuche mit den Konfigurationen anderer in der Datenbank befindlicher Komponenten. Teilweise wird hier auch Benutzerinteraktionen erforderlich, z.B. bei der Eingabe eines neuen Mobilfunknetzes, teilweise erfolgt die Pflege manuell durch den Datenbankadministrator.

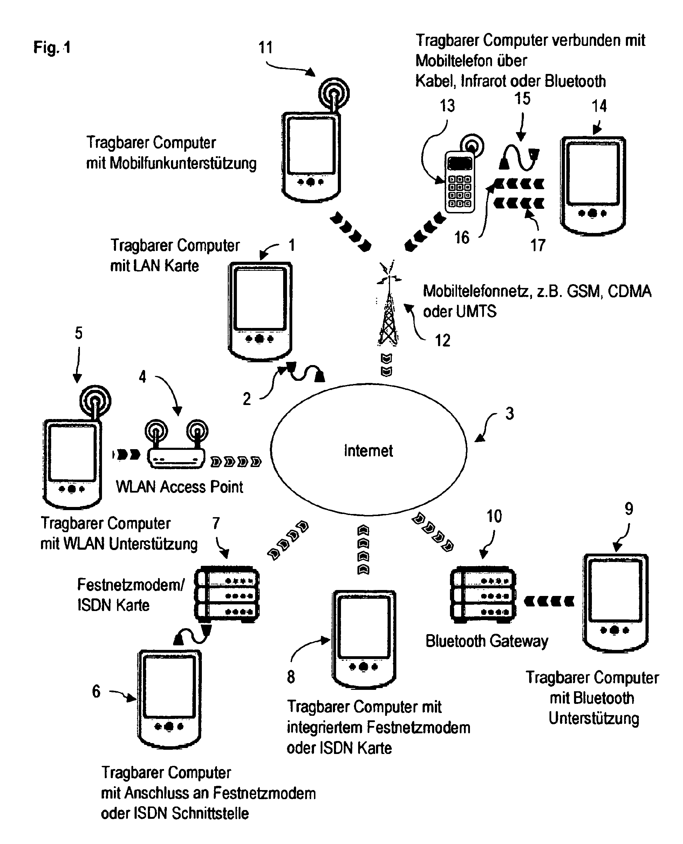

Der Internet Assistent 54 erkennt 56 die derzeit verfügbaren Verbindungsmöglichkeiten 59 zum Internet. Zu diesen Verbindungsmöglichkeiten gehören in Reihenfolge der typischerweise erreichten Geschwindigkeit bzw. abnehmenden Kosten (siehe Fig. 1):
1. Eine direkte Verbindung eines Computers 1 mit einer LAN-Karte, die mit einem Kabel 2 mit einem TCP/IP (Transmission Control Protocol) Netzwerk verbunden wird. Diese Konfiguration der LAN-Verbindung wird nicht von der Datenbank oder dem Internet Assistenten 54 unterstützt, da die benötigten Daten netzwerkspezifisch, also privat sind und somit nicht global erfasst werden können. Durch Einsatz von DHCP (Dynamic Host Configuration Protocol) Servern kann jedoch in jedem LAN ein Verbindungsaufbau allein durch Einstecken des Kabels erreicht werden.
2. Eine drahtlose WLAN Verbindung eines Computers 5 mit WLAN-Unterstützung entsprechend dem bekannten WLAN Protokoll über einen sogenannten WLAN Access Point 4. Die WLAN Erkennung und Konfiguration wird weiter unten beschrieben.
3. Eine Bluetooth Verbindung eines Computers 9 mit Bluetooth-Unterstützung zu einem Computer 10 der einen Internet Gateway anbietet.
4. Eine Einwahlverbindung eines Computers 6,8 mit Anschluß an ein analoges Festnetzmodem oder einer ISDN Schnittstelle 7 über das Telefonnetz.
5. Eine Internetverbindung über ein Mobiltelefonnetzwerk. Diese kann über ein in den Computer integriertes Mobilmodem 11 erfolgen, oder aber über ein datenfähiges Mobiltelefon 13, das mit dem Computer 14 über Kabel 15, Infrarot 16 oder Bluetooth 17 kommuniziert.

Das hier beschriebene Verfahren erkennt die zu jedem Zeitpunkt bestehenden Verbindungsmöglichkeiten und konfiguriert eine Verbindung 56, baut bei Bedarf gezielt eine Internetverbindung 57 auf und misst sowohl Datenübertragungsrate, als auch das Volumen der übertragenen Daten 58. Auf Basis dieser Funktionen bietet eine bevorzugtes Ausführungsbeispiel der Erfindung Internetanwendungen 50 wie Email Client oder Webbrowser folgende Schnittstellen (APIs) an:
1. Verbindung öffnen und schließen 51;
2. kumulierte und aktuelle Kosten 52 der Datenübertragung pro Minute oder pro Datenvolumen;
3. die aktuelle, maximal erreichte und durchschnittliche Datenübertragungsgeschwindigkeit 53 der derzeitigen Verbindung

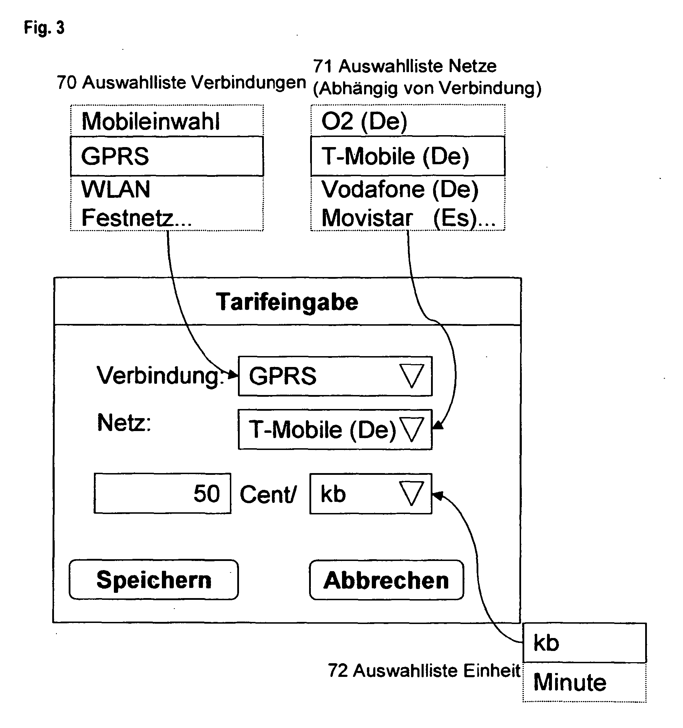

Auf Basis dieser Schnittstellen können Internetanwendungen eine optimale Nutzung der bestehenden Internetverbindung gewährleisten. Z.B. kann ein Email Client Nachrichten mit großen Anhängen immer nur dann übertragen, wenn eine bestimmte Verbindungsgeschwindigkeit gegeben ist oder die Kosten einen vorbestimmten Grenzwert nicht überschreiten. Während der Datenverkehr durch direkte Betriebssystemabfragen gemessen wird 58, kann der Tarif (die Kosten pro Datenvolumen und/oder Zeit) in einem bevorzugten Ausführungsbeispiel direkt durch den Nutzer abgeändert werden. Hieraus werden die jeweils anfallenden tatsächlichen Kosten berechnet. Vorzugsweise beinhaltet die interne Datenbank 55 bereits die Tarife für die mobile Datenübertragung in verschiedenen Mobilfunknetzen. In einem anderen Ausführungsbeispiel werden die Kosten für jede Verbindungsart vom Nutzer manuell neu eingegeben. Die Eingabe der Tarife bzw. die Abänderung der vordefinierten Tarife erfolgt über eine Eingabemaske 73, die beispielhaft in Fig. 3 gezeigt ist. Hierbei können im Kostenfeld 76 für eine Einwahl über das Mobiltelefonnetz die Kosten je nach Netz 71 eingegeben werden. Wenn im Verbindungsfeld 74 aus der Auswahlliste 70 "Verbindungen" eine Festnetzverbindung ausgewählt wird, erscheint im zweiten Feld 75 eine Liste 71 der konfigurierten Festnetzeinwahlnummern mit der Beschriftung "Einwahlnummer:" statt "Netz:". Wenn im Verbindungsfeld 74 eine WLAN ausgewählt wird, erscheint im Feld 75 eine Liste der bekannten Access Points mit der Beschriftung "Access Point:". Für andere Internetverbindungen erscheint das zweite Feld 75 gar nicht, aber gegebenenfalls anfallende Kosten können dennoch eingegeben werden. Bei jeder Eingabe hat der Nutzer die Wahl zwischen Kostenerfassung pro Zeiteinheit oder Datenvolumen 72,76, 77.

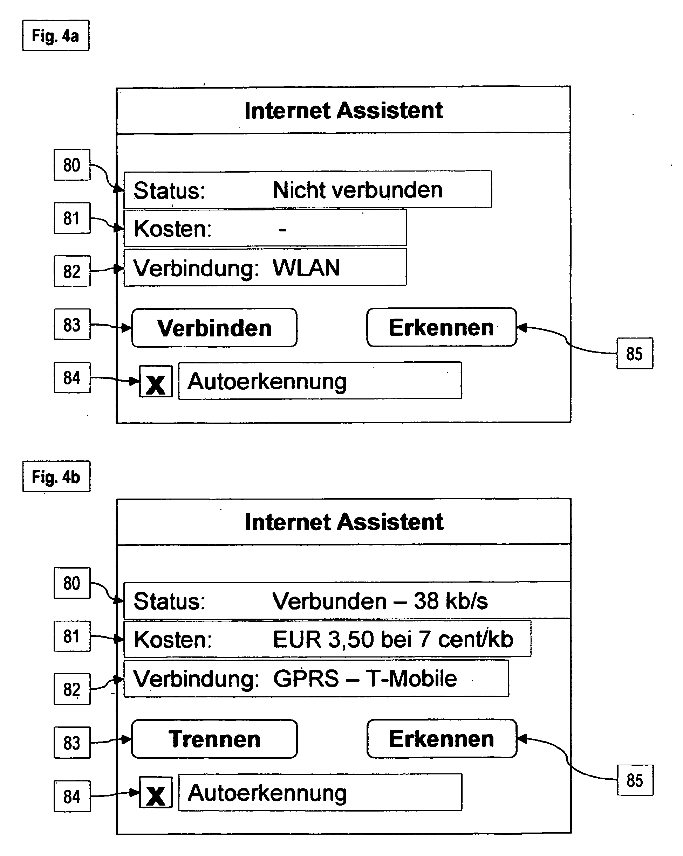

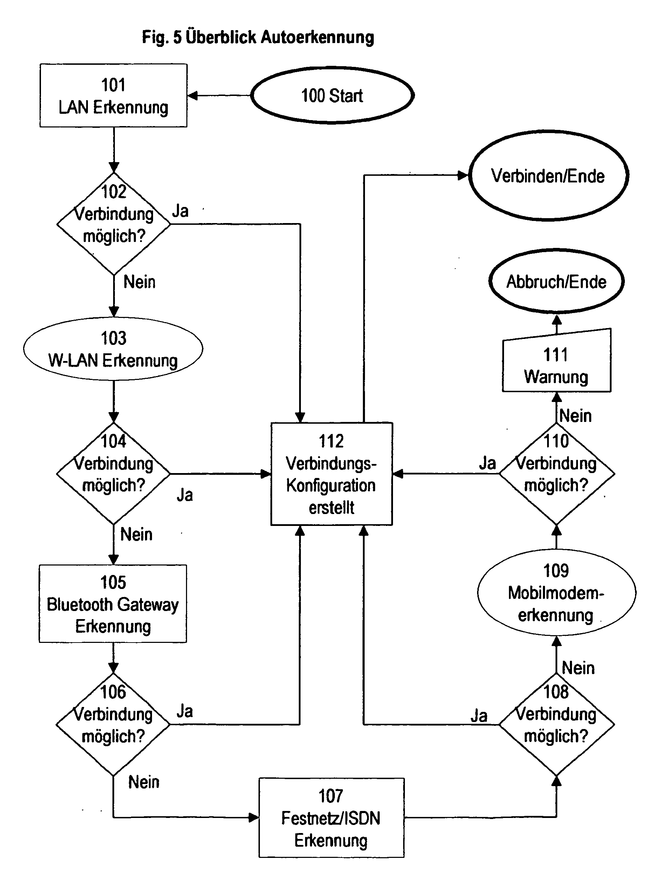

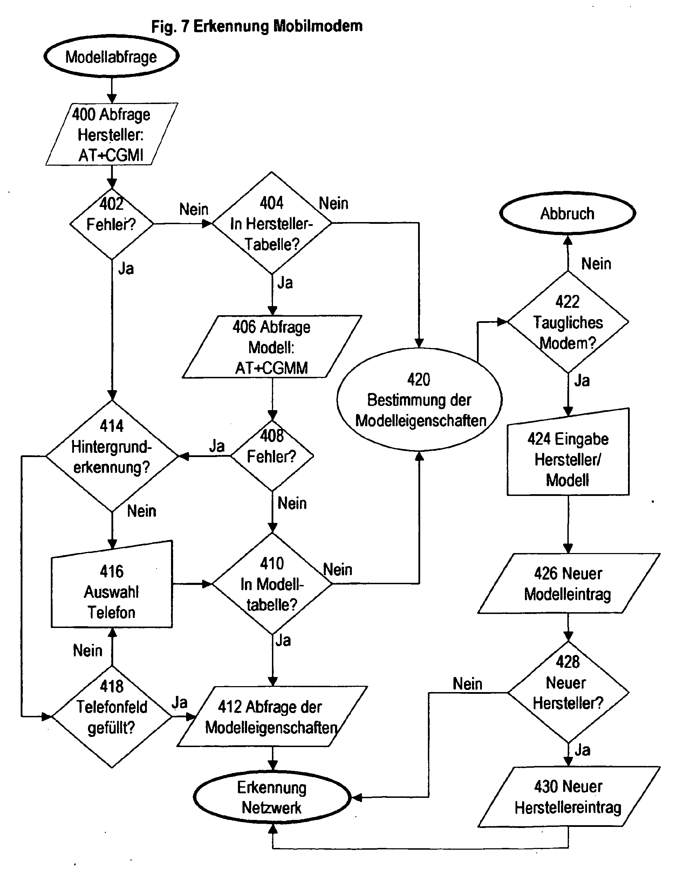

Wie aus in Fig. 2 zu ersehen ist, umfasst das erfindungsgemäße Verfahren die Erkennung, Konfiguration 56 und den Verbindungsaufbau 57 eines Computers zum Internet 60. Das neue Verfahren, anhand dessen diese Funktionalität zur Verfügung gestellt wird, ist in Fig.5 übersichtlich dargestellt. Die Hauptbenutzeroberfläche zur Ansteuerung dieser Funktionen ist in Fig. 4a und Fig. 4b beispielhaft dargestellt. Hierbei zeigt Fig. 4a die Oberfläche, wenn keine Internetverbindung besteht und Fig. 4b wenn eine Verbindung aufgebaut ist. Die Oberfläche zeigt Information zum Status 80, gegebenenfalls den Kosten 81 und der derzeitigen oder letzten Verbindung 82 an. Dem Benutzer stehen zur Interaktion zwei Knöpfe zur Verfügung: "Verbinden/Trennen" 83 baut eine Internetverbindung auf oder trennt sie wieder. Wenn die Autoerkennung angeschaltet ist 84, so wird bei jedem Verbindungsaufbau eine Hintergrunderkennung der vorhandenen Verbindungsmöglichkeiten durchgeführt. Da dieser Prozess jedes Mal Zeit kostet, kann er auch ausgeschaltet werden. In diesem Fall wird über "Verbinden" 83 eine Internetverbindung mit den zuletzt verwendeten Parametern angestoßen. Eine ausführliche Erkennung aller Verbindungsmöglichkeiten wird durch den Knopf "Erkennen" 85 angestoßen. Je nach Ausführungsvariante werden dem Nutzer hier mehr Auswahldialoge zur Verfügung gestellt, als während der Autoerkennung beim Verbindungsaufbau. Z.B. wird in einer bevorzugten Ausführungsvariante bei Knopfdruck auf "Erkennen" und einer Verbindung über das Mobilfunknetz jedes Mal das bevorzugte Verbindungsprotokoll abgefragt, während bei der Hintergrunderkennung von "Verbinden" das zuletzt genutzte Protokoll in diesem Netz ohne Nutzerinteraktion wiederverwendet wird. Zwischen diesen beiden Varianten der Erkennung wird in den Flussdiagrammen, die diesen Ablauf im Detail beschreiben, durch die Zweigstellen "Hintergrunderkennung" 414, Fig.7, 820, Fig.9, 1103, 1120, Fig.12 und 326, Fig. 6 unterschieden.

Wie am besten in Fig. 5 ersichtlich, prüft das Verfahren anhand einer intern gespeicherten Reihenfolge alle Verbindungsmöglichkeiten:
1. LAN Erkennung 101 - hier wird nur geprüft ob LAN Hardware installiert ist und gegebenenfalls eine Verbindung besteht. Wenn eine Verbindung möglich ist 102, wird die Erkennung abgebrochen und der Status übermittelt.
2. WLAN Erkennung 103 , gemäß dem im folgenden beschriebenen Verfahren. Wenn eine WLAN Verbindung möglich ist 104, wird die Verbindungskonfiguration erstellt 112.
3. Verbindung über Bluetooth Gateway 105: Hier wird überprüft ob ein Bluetooth Gateway bekannt und erreichbar ist 106. In diesem Fall wird die Verbindungskonfiguration erstellt 112.
4. Eine mögliche Festnetzeinwahl wird überprüft, indem nach bestehenden Einwahlkonfigurationen gesucht wird, das entsprechende Modem/ISDN Karte angesprochen wird und geprüft wird, ob ein Wahlvorgang möglich ist (d.h. Modem/ISDN Karte sind an das Festnetz angeschlossen). Wenn eine Verbindung möglich ist 108, so kann in einer vorteilhaften Ausführungsvariante eine Standortbestimmung entweder anhand eines GPS-Moduls, oder aber anhand der automatischen Konfiguration mit einem GSM-Mobilmodem durchgeführt werden. Anhand der auf auf diese Weise ermittelten Standortdaten, kann dem Nutzer gezielt eine geeignete Einwahlmöglichkeiten im jeweiligen Land oder sogar im jeweiligen Vorwahlgebiet angeboten werden. In vielen Ländern bestehen landesweite Einwahlnummern zum gleichen Tarif, in anderen Ländern sind die vorteilhaftesten Tarife nur über lokale Rufnummern erreichbar. Während ein GPS-Modul Information von genügender Präzision auch zur Bestimmung der Vorwahl bieten kann, bietet ein Mobilmodem im Normalfall lediglich Information über das derzeit eingebuchte Netz und somit relativ zuverlässig über das Land, in welchem sich der Nutzer zum bestehenden Zeitpunkt befindet. Das Mobilmodem kann auch Information über die derzeitige Funkzelle melden, anhand derer eine genauere Standortbestimmung, abhängig von der variierenden Dichte der GSM-Sender, möglich wird. Um diese Standortinformation zu nutzen, muss die Datenbank auch Standortdaten der jeweiligen Einwahlnummern angepasst an die Messgenauigkeit der verwendeten Standortsbestimmungsmethode beinhalten. Im Falle der automatischen Einwahl (Hintergrunderkennung) wird über die Standortbestimmung die geeignetste Einwahlnummer ausgewählt. Ohne Standortbestimmung wird bei wiederholter Einwahl die letzte verwendete Nummer verwendet oder das hier beschriebene System fordert den Nutzer auf, unter den in der Datenbank enthaltenen Festnetzeinwahlnummern auszuwählen, wobei die Nummern vorteilhafterweise nach Ländern oder auch Vorwahl sortiert oder gefiltert werden. Hierauf wird die Internetverbindung auf Basis der ausgewählten Nummer konfiguriert 112.
5. Mobilmodemerkennung 109 , gemäß dem im folgenden beschriebenen Verfahren. Wenn auch hierüber keine Verbindung möglich ist 110, erscheint eine entsprechende Warnung und der Prozess wird abgebrochen. Andernfalls wird die Verbindung entsprechend der erkannten Parameter konfiguriert.

Nach der Prüfung der Verbindungsmöglichkeiten in der angegebenen Reihenfolge wird je nachdem, ob der Prozess durch "Verbinden" 83 mit Autoerkennung 84 oder aber durch "Erkennen" 85 Fig.4a, 4b angestoßen wurde eine Verbindung direkt aufgebaut oder nur die jetzt aktive Verbindungsoption in den Feldern 81 und 82 dargestellt.

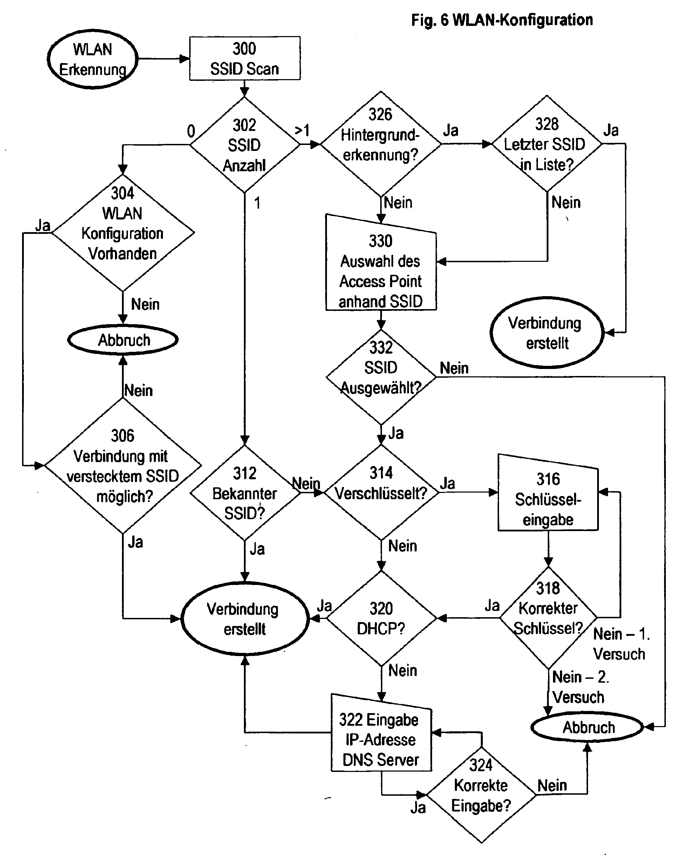

Im folgenden werden die Prozesse zur WLAN- und Mobilmodemerkennung anhand der Flussdiagramme Fig. 6 - 11 detailliert beschrieben.

Gemäß Fig.6 beginnt die WLAN-Erkennung mit einem SSID (Service Set Identifier) Scan 300, wobei alle WLAN Access Points im Empfangsbereich, die so konfiguriert sind, dass sie erkannt werden können, anhand des sogenannten SSID identifiziert werden. Wird auf diesen Weg kein SSID erkannt 302, könnte eine WLAN Verbindung nur über einen Access Point, der aus Sicherheitsgründen seinen SSID nicht veröffentlicht, möglich sein. Bei derartigen Access Points handelt es sich in der Regel um einen speziell konfigurierten privaten Access Point. In einer bevorzugten Ausführungsvariante prüft das hier dargestellte System in diesem Fall lediglich, ob die letzte WLAN-Verbindung über einen derartigen versteckten Access Point stattgefunden hat 304. Wenn nicht wird die WLAN Erkennung beendet. Andernfalls prüft das System ob ein Verbindungsaufbau möglich ist 306. Je nach dem Ergebnis dieses Schritts war die WLAN-Erkennung erfolgreich oder nicht.

Wurde mehr als ein SSID entdeckt 302, unterscheidet sich das Verhalten wiederum danach, ob der Prozess durch "Verbinden" 83 mit Autoerkennung 84 oder aber durch "Erkennen" 85 angestoßen wurde 326. Soll ein Verbindungsaufbau erreicht werden, so wird geprüft, ob in der Liste der erkannten SSIDs ein bekannter Access Point enthalten ist 328. Ein Access Point ist bekannt, wenn er zuvor erfolgreich genutzt wurde oder in der Datenbank enthalten ist. In diesem Fall wird dieser bekannte Access Point zum Erstellen der Verbindung genutzt. Bei mehreren bekannte Access Points wird der kostengünstigste genutzt. Im Falle einer Erkennung wird genauso, wie wenn keiner der erkannten Access Points bekannt ist, dem Nutzer ein Dialog zur Auswahl des Access Points anhand der SSID angezeigt. Wählt der Nutzer keinen Access Point aus dieser Liste aus 332 so bricht die WLAN Erkennung ab, andernfalls wird geprüft, ob der Access Point nur verschlüsselten Zugang erlaubt 314. In diesem Fall wird der Nutzer zur Schlüsseleingabe aufgefordert 316, der Schlüssel geprüft 318 und dem Nutzer bei Falscheingabe ein zweiter Versuch gewährt. Bei korrekter Eingabe geht es wie bei einem unverschlüsselten Access Point mit der DHCP Erkennung 320 weiter. Andernfalls erfolgt der Abbruch. Bietet der Access Point einen DHCP Server zur Vergabe einer Internet Adresse und Ermittelung von DNS Server und Gateway Adresse, so ist eine WLAN-Verbindung ohne weitere Nutzereingaben möglich. Andernfalls wird der Nutzer aufgefordert, diese Daten gemäß den bekannten Eingaben für die korrekte Erstellung einer TCP/IP Verbindung einzugeben 324. Bei korrekter Eingabe erfolgt die Verbindungskonfiguration, andernfalls der Abbruch.

Wurde beim SSID Scan 302 ausschließlich ein SSID ermittelt, so wird zunächst geprüft, ob dieser Access Point bereits bekannt und somit konfiguriert ist 312, womit ein direkter Verbindungsaufbau möglich ist. Andernfalls erfolgt die Prozedur ab 314 wie bei mehreren erkannten SSIDs.

Viele WLAN-Zugänge bedienen sich zur Zugangskontrolle nicht einer Verschlüsselung sondern einer anschliessenden HTTP-Authentifizierung bei einem Webserver. In einer vorteilhaften Anwendungsvariante werden auch die Parameter dieser Authentifizierungsmethode für den jeweiligen ISP in der Datenbank vorgehalten und von der Vorrichtung implementiert. Auf diese Weise wird dem Nutzer erspart, manuell eine bestimmte Webseite aufzurufen und sich hier anhand von Kundendaten zu authentifizieren.

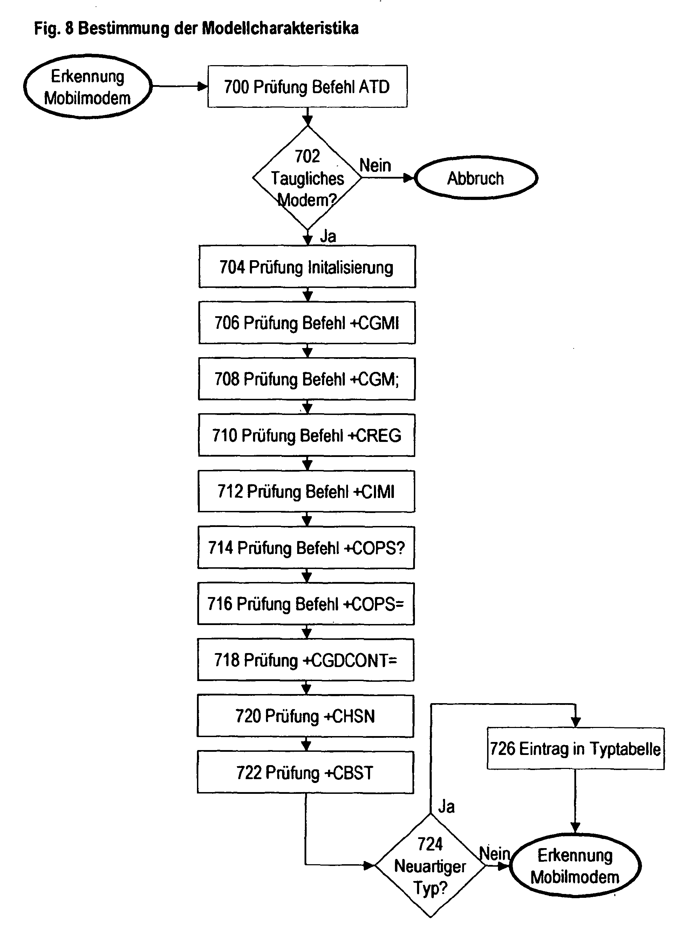

Wie in Fig. 5 zu sehen ist, folgt auf die W-LAN Erkennung die Erkennung der Verbindungsmöglichkeit über einen Bluetooth Router und über das Festnetz. Bietet keine ein Ergebnis, so wird als letzte Möglichkeit die zumeist teuerste aber in vielen Ländern flächendeckend gewährleistete Variante des Internetzugang über das Mobilfunknetz 109 geprüft. Dieser Ablauf ist in Fig. 7-10 detailliert beschrieben und beginnt mit der Mobilmodemerkennung in Fig.7 und Fig.8. Hier wird in einem ersten Schritt geprüft, ob das Mobilfunkmodem, dass über eine serielle Kabelverbindung, eine Infrarotverbindung, eine Bluetooth-Verbindung oder eine interne Schnittstelle - z.B. in der Ausführung einer PCMCIA Karte - angesprochen werden kann. Hierzu wird jede dieser Schnittstellen angesprochen und geprüft, ob ein Modem auf den Befehl "AT" reagiert. Wird kein Modem über eine der Schnittstellen gefunden, so wird eine entsprechende Warnung 111 angezeigt und der Verbindungsaufbau angebrochen. In einer Anwendunsvariante werden als letzter Schritte alternative Verbindungsmöglichkeiten in geographischer Nähe angezeigt. Wird dagegen ein Mobilmodem erkannt, so wird zuerst geprüft um welches Modell es sich handelt, wie in Fig. 7 detailliert dargestellt. Zur Erkennung des Mobiltelefons stehen zwei Befehle zur Verfügung, die nacheinander abgefragt werden. Zuerst wird der Hersteller abgefragt 400, danach das Modell 406. Wird einer der beiden Befehle nicht unterstützt 402, 408, so wird im Fall einer Hintergrunderkennung der zuletzt verwendete Modelltyp zur Abfrage der Eigenschaften 412 verwendet, falls schon einmal eine Mobilmodemverbindung aufgebaut wurde 418. Beim "Erkennen"-Prozess 414 oder wenn es keine vorherige Mobilfunkverbindung gab 418, erscheint ein Dialog zur Auswahl des Mobiltelefonmodells 416. Werden die beiden Befehle zur Bestimmung des Herstellers 400 und Modells 406 unterstützt, so wird jeweils geprüft, ob ein entsprechender Modelleintrag in der internen Datenbank besteht 404, 410. Wird ein Modell eindeutig definiert, so werden die Eigenschaften dieses Modells über die interne Datenbank 55 bezogen 412. Konnte ein Eintrag nicht gefunden werden, so wird das neue Verfahren zur Bestimmung der Modelleigenschaften durchgeführt 420, welches in Fig.8 detailliert beschrieben wird:

Zuerst wird über den Befehl "ATD" geprüft 700, ob es sich prinzipiell um ein taugliches Modem handelt 702. Wenn nicht, erfolgt ein Abbruch. Andernfalls werden nacheinander die für eine Datenverbindung nötigen Befehle bestimmt, wobei für die Initialisierungsbefehle alle bestehenden Befehle in der Datenbank in Reihenfolge abnehmender Länge getestet werden 704. Die anderen Befehle können auf die Unterstützung durch das Mobilmodem geprüft werden, wobei bei den Befehlen 706-716 lediglich festgehalten wird, ob sie überhaupt unterstützt werden, während für die Befehle 718-722 auch die unterstützten Parameter festgehalten werden. Falls der bestimmte Modelltyp sich in mindestens einer Eigenschaft von allen bekannten Modelltypen unterscheidet 724, wird anschließend ein neuer Eintrag in der Typtabelle der internen Datenbank geschrieben 726. Wurde durch diesen Prozess ein taugliches Modem erkannt 422, so erfolgt ein neuer Modelleintrag 426, nachdem der Nutzer aufgefordert wurde eine Modellbezeichnung für sein Mobiltelefon oder Modem einzugeben 424. Handelt es sich auch um einen bisher unbekannten Hersteller 428, erfolgt auch ein neuer Herstellereintrag 430. Diese neuen Daten werden bei der nächsten Synchronisation der internen Datenbank 55 mit der zentralen Datenbank 62 abgeglichen.

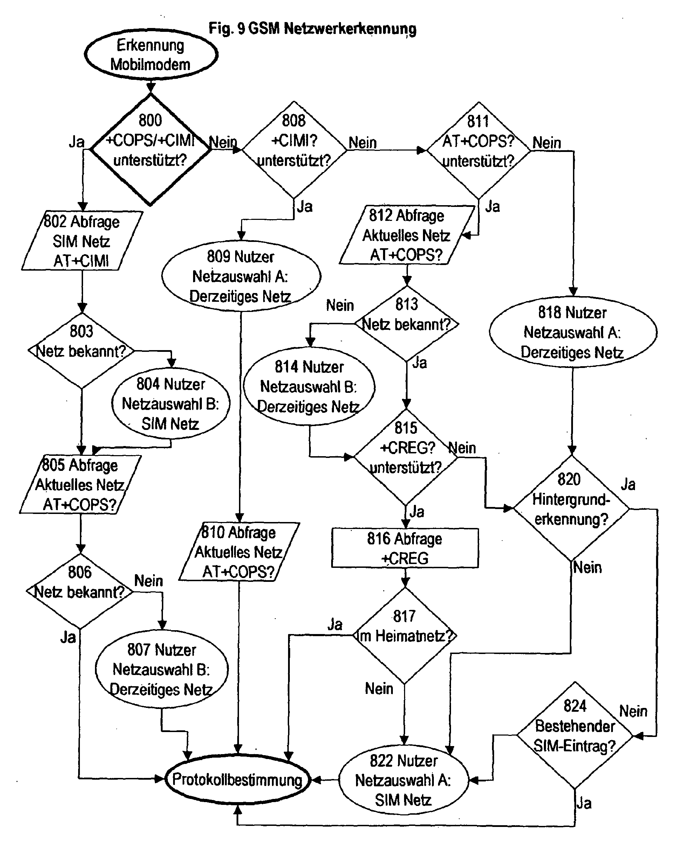

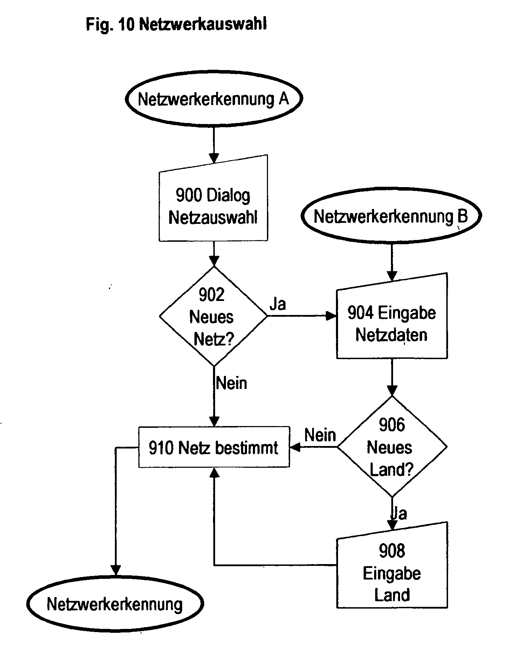

Als nächster Schritt erfolgt gemäß Fig. 9 und 10 die Erkennung des SIM-Netzes und des derzeitigen Empfangsnetzes, wobei in einem ersten Schritt 800 unterschieden wird, ob sowohl die Befehle zur Erkennung des SIM-Netzes +CIMI , als auch des derzeitigen Empfangsnetzes +COPS unterstützt werden. Ist diese Funktionalität gewährleistet, werden anhand der ermittelten Werte die entsprechenden Netzcharakteristika aus der internen Datenbank 55 abgerufen 802, 805. Ist eines der Netze nicht in der Datenbank vorhanden 803, 806, so erscheint jeweils ein Dialog zur Eingabe des Netzeigenschaften 804, 807, 904. Ist auch das entsprechende Land noch nicht in der Datenbank enthalten 906, wird auch hier die Eingabe mittels eines Dialogs 908 ermöglicht. Nach der Eingabe werden diese Daten in der internen Datenbank 55 gespeichert und bei der nächsten Synchronisation die zentrale Datenbank 62 um diese Werte erweitert.

Unterstützt das Mobilmodem lediglich die SIM Abfrage 808, so wird zur Ermittelung des derzeitigen Netzes ein Benutzerdialog 809, 900 gestartet, der eine Liste der bekannten Netze aus der internen Datenbank enthält. Hier gibt es wiederum die Möglichkeit der Eingabe für ein neues Netz 904, falls der Nutzer das derzeitige Netz nicht in der Liste gefunden hat 902, sowie eines neuen Landes 908, falls das entsprechende Land nicht zur Auswahl gezeigt wird 906. Falls ein bestehendes Netz ausgewählt wurde, werden die Netzeigenschaften aus der internen Datenbank 55 bezogen 810, andernfalls werden die Nutzereingaben genutzt und in der internen Datenbank 55 gespeichert.

Wird die SIM Abfrage nicht unterstützt, aber die Abfrage des derzeitigen Netzes über den Befehl +COPS? ermöglicht 811, so kann das SIM möglicherweise noch indirekt ermittelt werden: Zuerst werden die Eigenschaften des derzeitigen Netzes ermittelt 812-814 analog zu 805-807. Dann wird falls die Abfrage ob sich das Gerät im Heimatnetz befindet 815 unterstützt wird, so wird diese durchgeführt 816. Falls sich das Gerät im Heimatnetz befindet, dann ist das SIM Netz identisch mit dem derzeitigen Netz und die Mobilfunknetze sind bestimmt. Wird die Abfrage nach dem Heimatnetz auch nicht unterstützt, so wird im Fall einer Hintergrunderkennung 820 davon ausgegangen, dass die letzte SIM Einstellung weiterhin gültig ist, falls vorhanden 824. Andernfalls wird der Nutzer zur Auswahl des SIM Netzes aufgefordert 822, nach dem in Fig. 10 ersichtlichen, bereits beschriebenen Ablauf. Falls auch die Erkennung des derzeitigen Netzes unmöglich war 811, so wird der Nutzer zuvor nach dem gleichen Ablauf nach dem derzeitigen Netz gefragt 818.

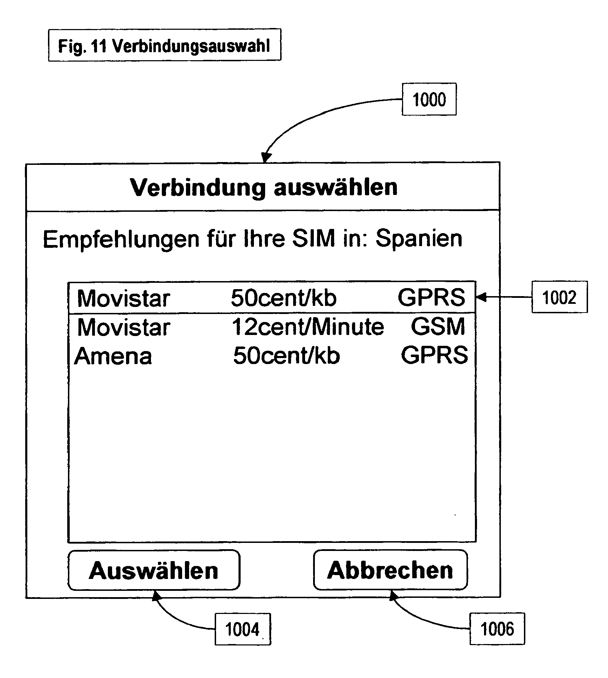

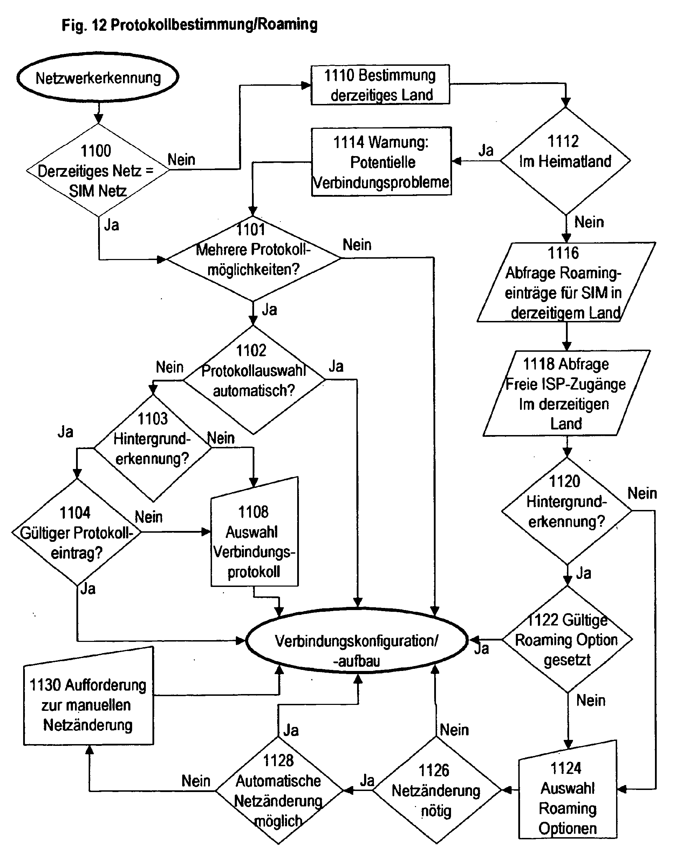

Sind Netz und Mobiltelefon bestimmt, so wird als nächstes ermittelt, welche Verbindungsprotokolle dem Nutzer im derzeitigen Land zur Verfügung stehen. Falls hier mehrere Optionen bestehen, wo werden diese in einer Weise dargestellt, dass auch der technisch nicht versierte Nutzer seine Optionen versteht. Eine beispielhafte Benutzeroberfläche ist in Fig. 11 dargestellt. Die Ermittelung dieser Möglichkeiten erfolgt nach dem erfindungsgemäßen Verfahren, das in Fig. 12 detailliert dargestellt ist: Wenn SIM Netz und Heimatnetz identisch sind 1100, so stellt sich dem Nutzer die Wahl zwischen verschiedenen Verbindungsprotokollen 1108, allerdings nur dann, wenn sowohl Netz als auch Mobilmodem mehr als ein Protokoll zulassen 1101, oder während des Verbindungsaufbaus 1103, wenn das Protokoll bereits bei der letzten Verbindung ausgewählt wurde 1104. Selbst in diesem Fall braucht der Nutzer kein Protokoll auszuwählen, wenn er zuvor vorgegeben hat, dass entweder immer die schnellste oder aber die billigste verfügbare Verbindung verwendet werden soll 1102. Andernfalls sind zu diesem Zeitpunkt alle Parameter für einen Verbindungsaufbau ermittelt.

Wenn dagegen SIM-Netz und derzeitiges Netz nicht identisch sind, erfolgt zuerst die Bestimmung des derzeitigen Landes 1110. Handelt es sich um das Heimatland, so erscheint in einer bevorzugten Ausführungsvariante lediglich eine Warnung, dass es zu Verbindungsschwierigkeiten kommen könnte 1114, da sich empirisch zeigen lässt, dass die nationalen Daten-Roaming-Abkommen nicht immer verlässlich sind. Danach erfolgt das Verfahren wie im Heimatnetz ab der Bestimmung, wie viele Protokolle Mobilmodem und Netz zulassen 1101. Befindet sich der Nutzer nicht im Heimatland, werden sowohl alle Roaming-Optionen ermittelt, die speziell für dieses SIM in diesem Land zur Verfügung stehen 1116, als auch alle Roaming-Optionen, die für alle SIM in diesem Land zur Verfügung stehen 1118. Während des Verbindungsaufbaus 1120 wird geprüft, ob die letzte Verbindung mit einer dieser Optionen erstellt wurde 1122. Wenn nicht erscheint der Verbindungsauswahldialog 1124, der bei der Erkennung in jedem Fall erscheint 1120. Je nach Auswahl kann das erwünschte Netz dem derzeitigen Netz entsprechen 1126, in welchem Fall wiederum alle Parameter zum Verbindungsaufbau ermittelt sind. Ist eine Netzänderung erforderlich 1126, so wird diese automatisch durchgeführt sofern möglich 1128, andernfalls wird der Nutzer aufgefordert, manuell das Empfangsnetz zu ändern 1130.

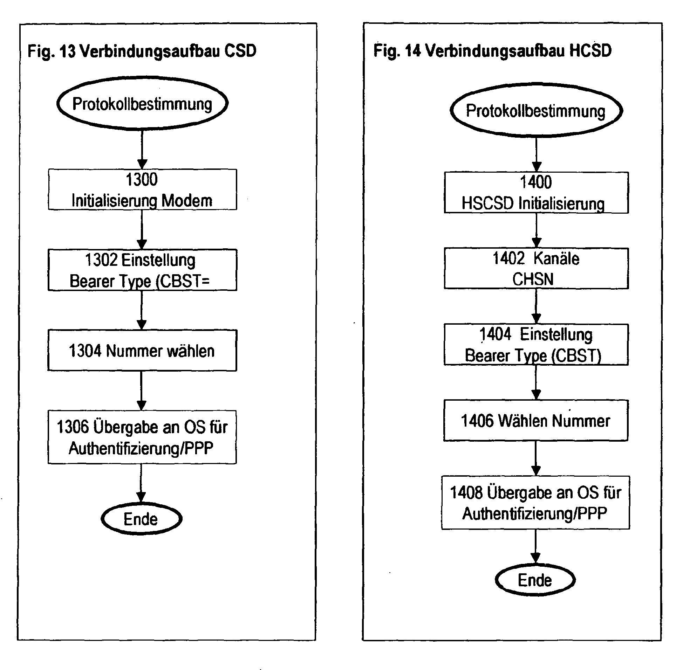

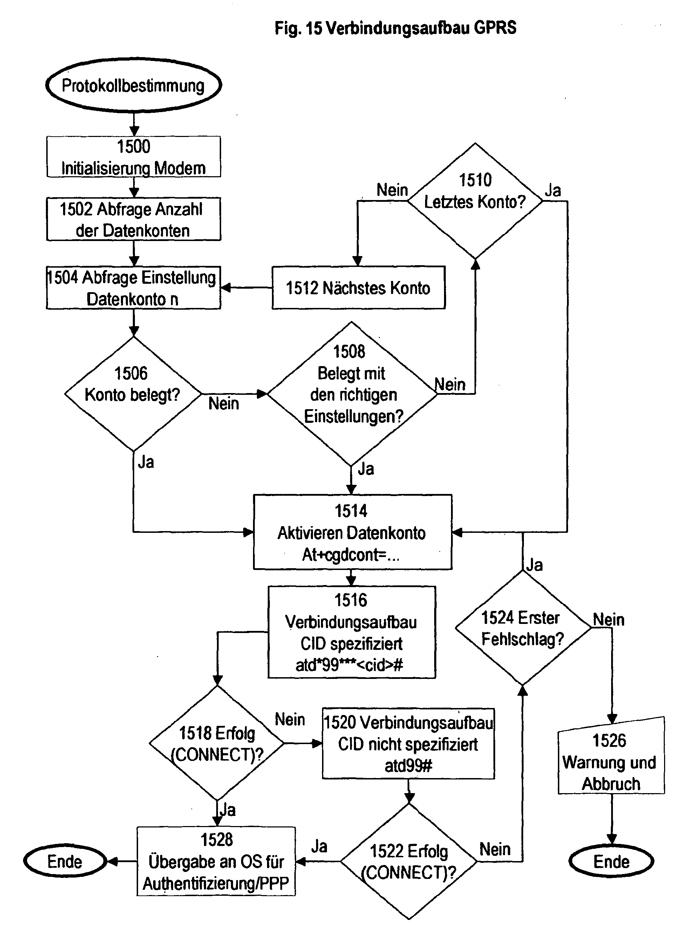

Im Falle einer Erkennung ist hiermit das Verfahren abgeschlossen. Der eigentliche Verbindungsaufbau über das Mobilfunknetz erfordert noch einige zusätzliche Schritte, die von derzeitigen Treibern nicht abgedeckt werden und ist in Fig. 13-15 detailliert dargestellt. Bei einer CSD Verbindung wird zuerst das Modem laut Datenbank initialisiert 1300. Danach wird der bestmögliche Bearer Type angefordert 1302 und die Einwahlnummer gewählt 1304, woraufhin der Verbindungsaufbau zur Authentifizierung nach dem bekannten PPP-Verfahren an das Betriebsystem übergeben wird. Analog hierzu erfolgt auch der HSCSD-Verbindungsaufbau gemäß Fig.14, wobei lediglich noch nach der Initialisierung 1400 die Kanalbündelung spezifiziert wird 1402. Auch bei einer GPRS Verbindung findet gemäß Fig. 15 zuerst eine Modeminitialisierung statt 1500. Danach wird die Anzahl der verfügbaren Datenkonten abgefragt 1502 und dann der Reihe nach für jedes Datenkonto die derzeitigen Einstellungen überprüft 1504. Wenn das Konto bereits konfiguriert ist 1506, so wird verglichen ob es mit dem APN, der für die aktuelle Verbindung benötigt wird, belegt ist 1508. Wenn nicht, so wird das nächste Konto überprüft 1512. Falls kein weiteres Konto mehr zur Verfügung steht 1510, so wird in einer bevorzugten Ausführungsvariante das letzte ohne Nutzerinteraktion überschrieben, was andernfalls mit dem ersten freien Konto geschieht 1514. Danach wird ein kontospezifischer Verbindungsaufbau versucht 1516. Ist dieser nicht erfolgreich 1518, erfolgt ein Versuch eines nicht kontospezifischen Verbindungsaufbaus 1520. Schlägt auch dieser fehl 1522, so wird beim ersten Versuch 1524 die Prozedur ab Kontoaktivierung 1514 wiederholt, andernfalls erfolgt eine Warnung 1526 und der Abbruch. Ist eine erfolgreicher Verbindungsaufbau geglückt 1518, 1522, so wird der weitere Verbindungsaufbau zur Authentifizierung nach dem bekannten PPP-Verfahren an das Betriebsystem übergeben.

Falls die Autoerkennung die nötige Hardware für eine Internetverbindung entdeckt hat, aber am bestehenden Standort keine Einwahlmöglichkeit zur Verfügung steht, so kann die Software in einer Ausführungsvariante daraufhin auf Zugangsmöglichkeiten in geographischer Nähe verweisen. Diese Möglichkeit ist auch dann von Interesse, wenn der einzige aktuell verfügbare Internetzugang besonders langsam oder besonders teuer ist, sich aber ein schneller und/oder billiger Zugang in der Nähe befindet. Voraussetzung für diese Funktionalität ist eine automatische Standortbestimmung wie oben beschrieben.

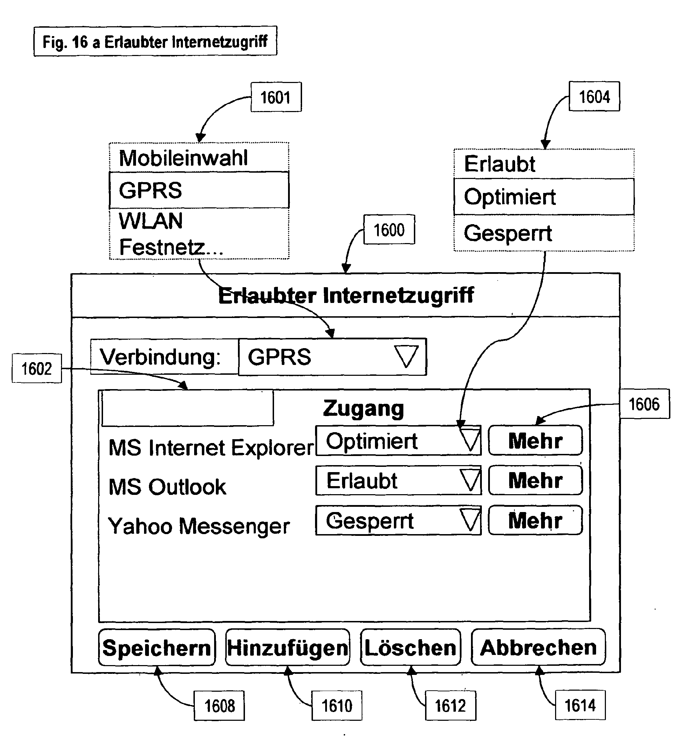

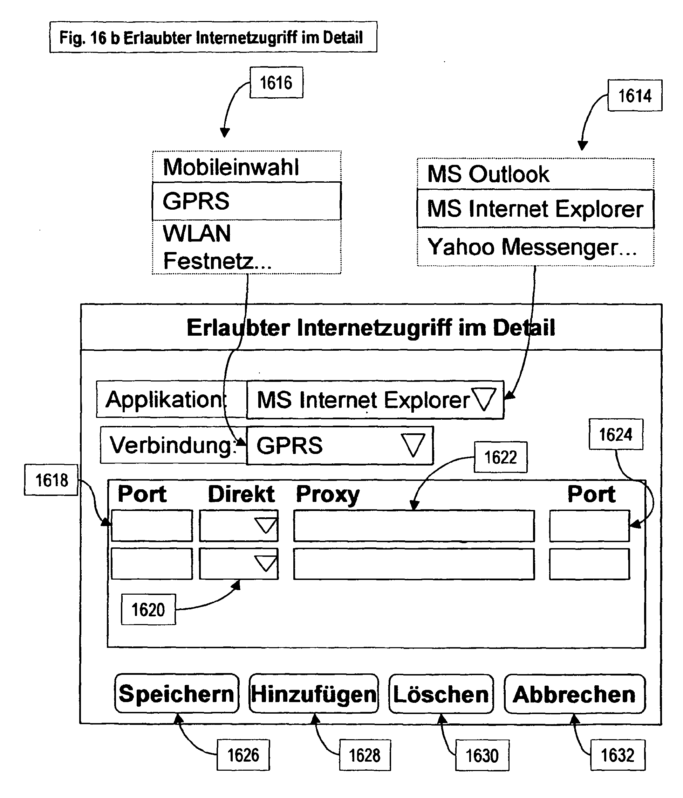

Ist die Internetverbindung gemäß der oben beschriebenen Verfahrensvarianten erfolgreich aufgebaut, so kontrolliert das hier beschriebene System in einer bevorzugten Ausführungsvariante den Internetzugriff einzelner Applikationen. Die Standardeinstellungen hierzu kommen aus der internen Datenbank 55 und können, wie in Fig. 16 beispielhaft dargestellt, durch den Nutzer abgeändert werden. Wird der Dialog 1600 vom Nutzer geöffnet, so kann er im Auswahlfeld 1601 die Internetverbindung auswählen, für welche die Zugriffsregeln bearbeitet werden sollen. Für jeder dieser Verbindungen sind in der internen Datenbank Applikationen und deren Rechte gespeichert, die dementsprechend in der Liste 1602 angezeigt werden. Diese Liste kann über den Knopf "Hinzufügeri" 1610 ergänzt werden. "Speichern" 1608 speichert die angezeigten und bearbeiteten Daten in der internen Datenbank 55 und "Abbrechen" 1614 ermöglicht das Verlassen des Dialogs ohne jegliche Änderung. Für jede gelistete Applikation kann in diesem Dialog der Internetzugriff im Feld 1604 entweder erlaubt, optimiert oder gesperrt werden, wobei die Auswahl H "optimiert" den Datenverkehr über einen speziellen Optimierungsserver umleitet, der zum Beispiel die Daten komprimiert, umformatiert oder filtert. Eine genauere Bearbeitung ist durch den Knopf 1606 gewährleistet, der zu Detaileinstellungen führt, die in Fig. 16b beispielhaft dargestellt werden. Hier kann für jede Applikation 1614 und Verbindung 1616 der Internetzugriff Port-spezifisch 1618 festgelegt 1626, 1628 und angepasst 1626, 1630 werden, indem für die angezeigten erlaubten Ports entweder direkter Zugriff erlaubt wird 1620 oder die Internetadresse 1622 und der Port 1624 des zu verwendenden Optimierungsservers angegeben werden. Da hier auch der Proxyserver eines LAN, das nur per VPN erreichbar ist, eingegeben werden kann, gewährleistet diese Vorrichtung ebenalls, dass je nach Bedarf nur der gesicherte Zugriff zum Internet über einen Proxyserver erlaubt ist, und der Anwender somit durch den Firewall seines LAN geschützt ist.

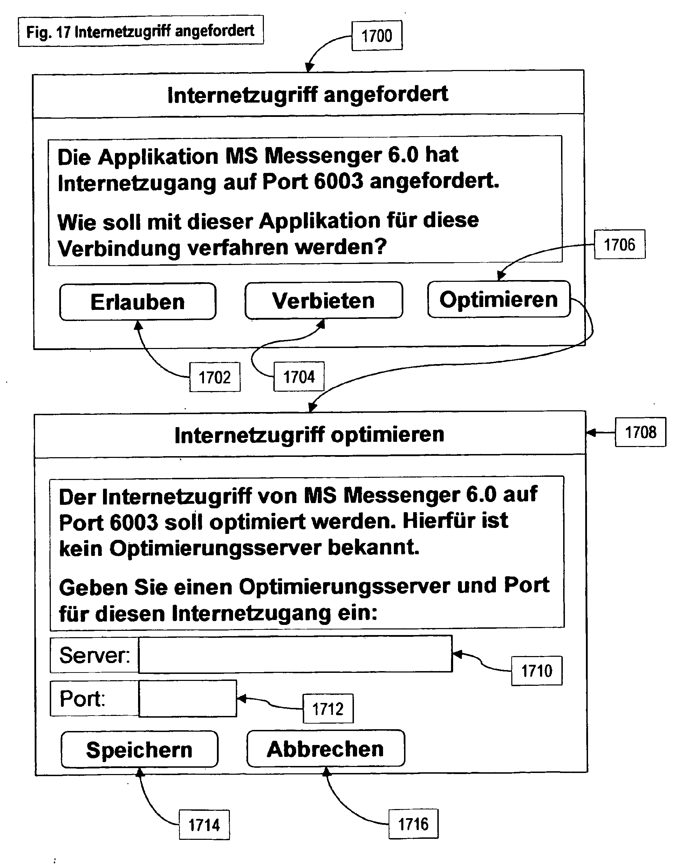

Versucht während einer offenen Internetverbindung eine Anwendung, die in dieser Liste noch nicht erfasst ist, auf einem bestimmten Port das Internet zu nutzen, so wird in einem bevorzugten Ausführungsbeispiel ein Dialog 1700 angezeigt, der beispielhaft in Fig. 17 dargestellt ist. Darüber kann der Nutzer bequem die oben beschriebene Liste von Internetzugriffsregeln erweitern, indem er dieser Applikation für diese Verbindung auf besagtem Port den Zugriff entweder erlaubt 1702, verbietet 1704 oder über einen Optimierungsserver umleitet 1706, der entweder für diesen Port schon in der lokalen Datenbank vorgehalten ist oder aber beispielhaft über einen Zusatzdialog 1708 mit der Internetadresse 1710 des Servers und dem Zugriffs-Port 1712 gespeichert werden kann 1714.

## Patentansprüche

1. Verfahren zur Herstellung einer Verbindung zur Datenübermittlung zwischen einem Computer und dem Internet, bei dem eine interne Datenbank(55) mit den Parametern der in Betracht kommenden Verbindungsoptionen erstellt wird, durch den Computer(1,5,6,8,9,11,14) geprüft wird, welche der Verbindungsoptionen derzeit zur Verfügung steht, ein Verbindungsprotokoll durch den Computer (1,5,6,8,9,11,14) in Zusammenwirken mit der internen Datenbank(55) ausgewählt wird und der Internetzugang durch den Computer(1,5,6,8,9,11,14) aufgebaut wird, **dadurch gekennzeichnet dass** in die interne Datenbank(55) eine Tabelle der Mobilfunknetze und eine Tabelle der Mobilfunkmodems aufgenommen werden und dass zur Prüfung, welche Mobilfunkmodems vorhanden sind und welchen Heimatsnetzen die vorhandenen Mobilfunkmodems zugeordnet sind, der Computer(1,5,6,8,9,11,14) im Zusammenwirken mit der internen Datenbank (55) eine Abfrage der im Mobilfunkmodem eingelegten SIM-Karte durchführt und dass der Computer(1,5,6,8,9,11,14) im Zusammenwirken mit der internen Datenbank (55) den Internetzugang aufbaut.

2. Verfahren nach Patentanspruch 1, **dadurch gekennzeichnet, dass** in die Datenbank(54) auch eine Tabelle der Roaming-Optionen aufgenommen wird.

3. Verfahren nach Patentanspruch 1 oder 2, **dadurch gekennzeichnet, dass** die Datenbank (55) auch mit Daten betreffend der Übertragungsgeschwindigkeiten und Kosten der verschiedenen Verbindungsoptionen zwischen dem Computer(1,5.6,8,9,11,14) und dem Internet(3,60) geladen wird.

4. Verfahren nach einem oder mehreren der Patentansprüche 1-3, **dadurch gekennzeichnet, dass** die Datenbank(55) auch mit Daten zum Standort verschiedener Verbindungsoptionen zwischen dem Computer und dem Internet(3,60) geladen wird.

5. Verfahren nach einem oder mehreren der Patentansprüche 1 - 4, **dadurch gekennzeichnet, dass** die Datenbank (55) auch mit Daten zum Authentifizierungsprotokoll verschiedener Verbindungsoptionen zwischen dem Computer(1,5,6,8, 9,11,14) und dem Internet(3,60) geladen wird.

6. Verfahren nach einem oder mehreren der Patentansprüche 1 - 5, **dadurch gekennzeichnet, dass** der Computer(1,5,6,8, 9,11,14) dem Nutzer Verbindungsoptionen zum Internet(3,60) zur Auswahl stellt und aufgrund der getroffenen Entscheidung des Nutzers die Verbindung herstellt.

7. Verfahren nach einem oder mehreren der Patentansprüche 1 - 6, **dadurch gekennzeichnet, dass** für die Auswahl unter den verschiedenen Verbindungsalternativen Voreinstellungsmöglichkeiten vorgesehen sind.

8. Verfahren nach einem oder mehreren der Patentansprüche 1 - 7, **dadurch gekennzeichnet, dass** die Daten der internen Datenbank(55) periodisch auf den neuesten Stand gebracht werden.

9. Verfahren nach einem oder mehreren der Patentansprüche 1 - 8, **dadurch gekennzeichnet, dass** die interne Datenbank(55) ihre Daten mit einer zentralen Datenbank(62) austauscht.

10. Verfahren nach einem oder mehreren der Patentansprüche 1 - 9, **dadurch gekennzeichnet, dass** als Computer(1,5,6,8,9, 11,14) ein Taschencomputer verwendet wird.

11. Verfahren nach einem oder mehreren der Patentansprüche 1 - 10, **dadurch gekennzeichnet, dass** als Mobilfunkmodem ein datenfähiges Mobiltelefon(13) verwendet wird.

12. Verfahren nach einem oder mehreren der Patentansprüche 1 - 11, **dadurch gekennzeichnet,** die interne Datenbank(55) auch mit den Daten der von dem eingesetzten Mobilfunkmodem unterstützten Protokolle gespeist wird.

13. Verfahren nach Patentanspruch 12, **dadurch gekennzeichnet, dass** der Computer(1,5,6,8,9,11,14) die zur Verfügung stehenden Verbindungsmöglichkeiten zwischen dem Computer und dem Mobilfunkmodem prüft und die Verbindung zum Mobilfunkmodem öffnet.

14. Verfahren nach Patentanspruch 12 oder 13, **dadurch gekennzeichnet, dass** der Computer(1,5,6,8,9,11,14) Hersteller und Modell des Mobilfunkmodems prüft und in Abhängigkeit von dieser Prüfung unterstützende Protokolle aus der internen Datenbank(55) bezieht.

15. Verfahren nach einem oder mehreren der Patentansprüche 1 -14, **dadurch gekennzeichnet, dass** der Datenverkehr durch direkte Betriebssystemabfragen gemessen und die tatsächlich anfallenden Kosten der Datenverbindung anhand von in der internen Datenbank(55) gespeicherten Tarifinformationen berechnet wird.

16. Verfahren nach Patentanspruch 15, **dadurch gekennzeichnet, dass** der Internetzugriff einiger Anwendungen in Abhängigkeit von Kosten und Geschwindigkeit der Datenverbindung eingeschränkt oder optimiert wird oder das Internetrouting geändert wird.

17. Vorrichtung zur Herstellung einer Verbindung zur Datenübermittlung zwischen einem Computer und dem Internet mit einer internen Datenbank(55), die die Daten für die in Betracht kommenden Verbindungsoptionen enthält, und die in der Lage ist, zu prüfen, welche der Verbindungsoptionen jeweils zur Verfügung steht, sowie ein geeignetes Verbindungsprotokoll in Zusammenwirken mit der internen Datenbank auszuwählen und eine Verbindung zum Internet herzustellen, **dadurch gekennzeichnet, dass** die interne Datenbank(55)eine Tabelle der Mobilfunknetze und eine Tabelle der Mobilfunkmodems, sowie vorzugsweise eine Tabelle der Roaming-Optionen enthält und dass der Computer(1,5,6,8,9,11,14) zur Prüfung, welche Mobilfunkmodems vorhanden sind und welchen Heimatnetzen die vorhandenen Mobilfunkmodems zugeordnet sind, derart programmiert ist, um im Zusammenwirken mit der Datenbank(55) eine Abfrage der im Mobilfunkmodem eingelegten SIM-Karte durchzuführen und den Internetzugang in Zusammenwirken mit der internen Datenbank aufzubauen.

## Claims

1. Method for the creation of a data-connection linking a computer (1,5,6,8,9,11,14) to the Internet (3,60), based on an internal database (55) containing the pertinent connection parameters , where the computer (1,5,6,8,9,11,14) verifies the currently available connection options, a connection protocol is selected by the computer (1,5,6,8,9,11,14) based on the information of the internal database(55), and an Internet connection is established
**characterised in that**
a table of mobile networks and a table of mobile modems is included in the internal database(55)
and that
the computer (1,5,6,8,9,11,14) in interaction with the internal database (55) queries the SIM-card inserted into the mobile modem to verify which mobile modems are available and which is the home network associated to the mobile modem
and that
the computer (1,5,6,8,9,11,14) establishes the Internet connection in interaction with the internal database(55).

2. The method according to claim 1, wherein a table of roaming-options is included in the database (55)

3. The method according to any of the claims 1-2, wherein data describing the transmission speed and the cost for Internet connection options for the computer (1,5,6,8,9,11,14) are included in the database (55).

4. The method according to any of the claims 1-3, wherein data describing the geographic location of connection options for the computer (1,5,6,8,9,11,14) to the Internet (3,60) are included in the database (55).

5. The method according to any of the claims 1-4, wherein data describing the authentication protocol of connection options for the computer (1,5,6,8,9,11,14) to the Internet (3,60) are included in the database (55).

6. The method according to any of the claims 1-5, wherein the computer (1,5,6,8,9,11,14) offers different Internet connection options to the user and establishes the connection according to the option selected by the user.

7. The method according to any of the claims 1-6, wherein default settings are available for the selection of the Internet connection option.

8. The method according to any of the claims 1-7, wherein the data contained in the internal database (55) is periodically updated.

9. The method according to any of the claims 1-8, wherein the internal database (55) exchanges data with a central database(62).

10. The method according to any of the claims 1-9, wherein the computer (1,5,6,8,9,11,14) takes the form of a handheld computer.

11. The method according to any of the claims 1-10, where the mobile modem takes the form of a mobile phone (13).

12. The method according to any of the claims 1-11, wherein data describing the data transmission protocols supported by mobile modems are included in the internal database (55).

13. The method according to any of the claims 1-12, wherein the computer (1,5,6,8,9,11,14) verifies the available communication options to the mobile modem and opens a connection to the mobile modem accordingly.

14. The method according to any of the claims 1-13, wherein the computer (1,5,6,8,9,11,14) verifies manufacturer and model of the mobile modem and accordingly obtains the supported data transmission protocols from the internal database (55).

15. The method according to any of the claims 1-14, wherein the data traffic is measured by direct operating system calls and wherein the accumulated costs of the Internet connection is calculated based on tariff data contained in the internal database (55).

16. The method according to claim 15, wherein the access to the Internet of some applications is limited or optimized depending on the costs and transmission speed of the data connection or the internet routing is changed.

17. A device for the creation of a data-connection linking a computer (1,5,6,8,9,11,14) to the Internet (3,60), comprising an internal database (55) containing the pertinent connection parameters and the capability of verifying the currently available connection options, selecting an appropriate connection option and establishing an Internet connection,
**characterised in that**
a table of mobile networks and a table of mobile modems is included in the internal database(55)
and that the internal database (55) preferentially contains a table of roaming options
and that in order to verify which mobile modem is available and which is the home networks associated to the modem, the computer (1,5,6,8,9,11,14) is programmed to interact with the internal database (55) to query the SIM-card inserted into the mobile modem and to interact with the internal database (55) to establish an Internet connection.

## Revendications

1. Procédé de création d'une connexion entrainant un transfert de données entre un ordinateur et Internet basé sur une base de données interne(55) contenant les paramètres de ladite connexion, par ce procédé l'ordinateur (1,5,6,8,9,11,14) vérifie les options de connexion disponibles au moment de la connexion, un protocole de connexion est sélectionné par l'ordinateur (1,5,6,8,9,11,14) basé sur l'information de la base de données interne (55) et l'ordinateur (1,5,6,8,9,11,14) établit l'accès à Internet (3,60), ce procédé est **caractérisé par** l'enregistrement d'un tableau des réseaux de téléphonie mobile et d'un tableau des modems de téléphonie mobile dans la base de données interne(55) pour vérifier quels modems de téléphonie mobile sont disponibles et à quels réseaux nationaux cesdits modems ont été attribués, l'ordinateur (1,5,6,8,9,11,14) avec l'aide de la base de données interne (55) procède à un questionnement de la carte SIM insérée dans le modem mobile de sorte que l'ordinateur (1,5,6,8,9,11,14) avec l'aide de la base de données (55) établit l'accès à Internet (3,60).

2. Procédé, selon la revendication 1, **caractérisé par** l'inclusion dans la base de données (55) d'un tableau des options de roaming.

3. Procédé, selon la revendication 1 ou 2, **caractérisé par** l'inclusion dans la base de données (55) de données décrivant la vitesse de transmission et les coûts des différentes options de connexion entre l'ordinateur (1,5,6,8,9,11,14) et Internet (3, 60) .

4. Procédé, selon les revendications 1-3, **caractérisé par** l'inclusion dans la base de données (55) de données concernant aussi la localisation géographique des différentes options de connexion entre l'ordinateur (1,5,6,8,9,11,14) et Internet (3, 60) .

5. Procédé, selon les revendications 1-4, **caractérisé par** l'inclusion dans la base de données (55) de données concernant aussi les protocoles d'authentification des différentes options de connexion entre l'ordinateur (1,5,6,8,9,11,14) et Internet (3, 60) .

6. Procédé, selon les revendications 1-5, **caractérisé en ce que** l'ordinateur (1,5,6,8,9,11,14) propose à l'utilisateur différentes options de connexion à Internet (3,60) et connecte ce dernier à Internet (3,60) du fait de son choix.

7. Procédé, selon les revendications 1-6, **caractérisé en ce que** des paramètres de connexion par défaut ont été prévus pour sélectionner une option de connexion à Internet (3,60).

8. Procédé, selon les revendications 1-7, **caractérisé en ce que** les données de la base de données interne (55) soient périodiquement actualisées.

9. Procédé, selon les revendications 1-8, **caractérisé en ce que** la base de données interne (55) échange ses données avec une base de données centrale (62).

10. Procédé, selon les revendications 1-9, **caractérisé en ce que** l'ordinateur (1,5,6,8,9,11,14) peut être un ordinateur portable.

11. Procédé, selon les revendications 1-10, **caractérisé en ce que** le modem mobile peut prendre la forme d'un téléphone portable (13).

12. Procédé, selon les revendications 1-11, **caractérisé par** l'inclusion dans la base de données interne(55) de données décrivant les protocoles de transmission des données supportés par les modems mobiles.

13. Procédé, selon les revendications 1-12, **caractérisé en ce que** l'ordinateur (1,5,6,8,9,11,14)vérifie les différentes options de connexion disponibles entre l'ordinateur et le modem mobile et ouvre la connexion au modem mobile.

14. Procédé, selon les revendications 1-13, **caractérisé en ce que** l'ordinateur (1,5,6,8,9,11,14)vérifie le fabricant et le modèle du modem mobile et selon cette vérification obtient de la base de données (55) les protocoles supportés.

15. Procédé, selon les revendications 1-14, **caractérisé en ce que** le flux des données est mesuré directement par un questionnement du système d'exploitation et les coûts réels de connexion sont calculés en fonction des informations tarifaires sauvegardées dans la base de données (55).

16. Procédé, selon les revendications 1-15, **caractérisé en ce que** l'accès à Internet (3,60) de certaines applications puisse être réduit, optimisé ou modifié selon le coût et la vitesse de connexion.

17. Dispositif pour la création d'une connexion entrainant un transfert de données entre un ordinateur et Internet basé sur une base de données interne(55) qui contient les informations pour les options de connexion et qui est capable de vérifier la disponibilité des options de connexion et de choisir un protocole de connexion adequat pour établir une connexion à Internet, **caractérisé en ce que** la base de données interne (55) contient un tableau des réseaux de téléphonie mobile, un tableau des modems mobiles ainsi qu'un tableau des options de roaming et que l'ordinateur (1,5,6,8,9,11,14) pour vérifier quels modems de téléphonie mobile sont disponibles et à quels réseaux nationaux cesdits modems ont été attribués, est programmé pour pouvoir, avec l'aide de la base de données interne(55), procéder à un questionnement de la carte SIM insérée dans le modem mobile de sorte que l'ordinateur (1,5,6,8,9,11,14) avec l'aide de la base de données (55) établit l'accès à Internet (3,60).
